# EUROPÄISCHE PATENTSCHRIFT

(11) **EP 4 489 995 B1**
(45) Veröffentlichungstag und Bekanntmachung des Hinweises auf die Patenterteilung: **11.03.2026**
(21) Anmeldenummer: 23705949.8
(22) Anmeldetag: 09.02.2023
(51) Int. Cl.: B60P 7/13

(54) **ANHEBE- UND ABSENKANORDNUNG FÜR CONTAINERVERRIEGELUNG UND ANHEBE- UND ABSENKVERFAHREN DAMIT**
LIFTING AND LOWERING ARRANGEMENT FOR CONTAINER LOCKING, AND LIFTING AND LOWERING METHOD THEREFOR
AGENCEMENT DE LEVAGE ET D'ABAISSEMENT POUR VERROUILLAGE DE RÉCIPIENT, ET PROCÉDÉ DE LEVAGE ET D'ABAISSEMENT ASSOCIÉ

(30) Priorität: 08.03.2022 DE 102022105423
(43) Veröffentlichungstag der Anmeldung: 15.01.2025
(73) Patentinhaber: Hamburger Patent Schmiede GmbH, 21244 Buchholz (DE)
(72) Erfinder: METTERNICH, Heinz-Rüdiger, 21279 Eversen-Heide (DE)
(74) Vertreter: Hansen, Jochen
(86) Internationale Anmeldenummer: PCT/DE2023/100108
(87) Internationale Veröffentlichungsnummer: WO 2023/169623

(56) Entgegenhaltungen:
- EP-A1- 1 621 399
- EP-B1- 1 243 466
- EP-B1- 1 300 284
- EP-B1- 2 708 416
- DE-U1- 202006 012 685

## Beschreibung

Die Erfindung betrifft eine Anhebe- und Absenkanordnung mit einer Containerverriegelungsvorrichtung auf einem Fahrzeug, zur Verriegelung eines auf einer Ladefläche des Fahrzeugs bedarfsweise in über der Ladefläche erhöhter Position zu transportierenden Containers, wobei die Anhebe- und Absenkanordnung einen Antrieb aufweist, mit dem die Containerverriegelungsvorrichtung absenkbar und wieder anhebbar ausgebildet ist. Ferner betrifft die Erfindung ein Anhebe- und Absenkverfahren damit.

In der noch nicht veröffentlichten DE 10 2021 112 894 des gleichen Anmelders ist eine feststehende Containerverriegelungsvorrichtung zur Verriegelung eines auf einer Ladefläche eines Fahrzeugs zu transportierenden Containers mit einem Eckbeschlag angemeldet, welche ein Verriegelungsgehäuse, einen Verriegelungsbolzen und einen Antrieb aufweist, wobei der Verriegelungsbolzen einen Schaft und einen Verriegelungskopf hat, der in entriegeltem Zustand über eine Öffnung des Eckbeschlags des Containers einführbar und in verriegeltem Zustand den Container über die Öffnung des Eckbeschlages hintergreifende Vorsprünge sichert.

Ferner ist aus der DE 20 2009 016 268 U1 eine hinsichtlich ihrer grundsätzlichen Höhenlage feststehende Containerverriegelungsvorrichtung mit beweglichem Verriegelungszapfen bekannt, die in einem Gehäuse eine vertikal verschiebbar geführte Druckplatte aufweist, wobei durch Auflastung des zur Verriegelung vorgesehenen Containers auf die Druckplatte der Verriegelungsbolzen gedreht und abgesenkt und damit der Container verriegelt wird.

Weiter ist aus der DE 20 2006 012 685 U1 eine handbetätigte Verriegelungseinrichtung zur Lagesicherung eines auf dem Fahrgestell eines Nutzfahrzeuges abstellbaren Containers bekannt, die mit einem am Fahrgestell festlegbaren Tragelement und mit einem gegenüber dem Tragelement höhenverstellbaren Verriegelungskörper ausgestattet ist, und bei der in dem Verriegelungskörper ein in Verstellrichtung des Verriegelungskörpers stehender Verriegelungsbolzen angeordnet ist, wobei das Tragelement mit einer handbetätigten Höhenverstelleinrichtung ausgestattet ist, die eine um eine feste Horizontalachse verdrehbare Verstellscheibe aufweist. Damit ist zwar eine manuell zu betätigende Hebe- und Absenkanordnung für eine ebenfalls manuell zu betätigende Containerverriegelung bekannt, jedoch keine Anregungen für eine Fernbetätigung dafür gegeben.

Die EP 2 708 416 B1 beschreibt eine manuell zwischen zwei Arbeitspositionen höhenverstellbare Containerverriegelung, nämlich von einer Position, in der ein Container auf Höhe der Ladefläche verriegelt werden kann, in eine erhöhte Position, bei der ein Container erhöht oberhalb der Ladefläche verriegelt werden kann.

Ebenso zeigt die EP 1 300 284 B1 eine Containerverriegelung, die manuell zwischen zwei entsprechenden Arbeitspositionen höhenverstellbar ist. Dabei erfolgt die Lageverschiebung geführt in einer Kulissenanordnung.

Auch die EP 1 621 399 A1 beschreibt eine Vorrichtung zur Änderung der Verriegelungshöhe eines Containers auf einem Fahrzeugchassis, bei der jedoch zwei Verriegelungen an einem beidseitigen Schwenkarm schwenkbar um eine Drehachse angeordnet sind.

Aus der DE 197 18 528 C1 ist eine Einrichtung zum Befestigen von Behältern auf Tragfahrzeugen bekannt, die durch Hubbewegung in eine aus der Ladeplattform herausragende, verrastbare Arbeitsstellung und eine vollständig im Gehäuse versenkte Ruhestellung bringbar ist, wobei in jedem Gehäuse mindestens ein Kurvengetriebe, bestehend aus einer Kurvenscheibe und einer Steuerkante des Riegelzapfens, und ein Stützkörper angeordnet sind, wobei die Kurvenscheibe und/oder der Stützkörper mit einem Stellantrieb in Wirkverbindung stehen und beweglich gelagert sind, die Kurvenscheibe mit dem Riegelzapfen in Eingriff bringbar ist, um den Riegelzapfen durch Hubbewegungen in die Arbeitsstellung und in die Ruhestellung zu bewegen.

Weiter ist aus der EP 1 243 466 B1 eine Verriegelungsvorrichtung und ein Verfahren dafür bekannt, bei dem über eine Kolbenzylinderanordnung aus der translatorischen Bewegung der Riegelmechanismus über eine daraus abgeleitete Schwenkbewegung in die ausgefahrene Position angehoben und nachfolgend der Verriegelungsvorgang durchführbar ist. Umgekehrt wird nach Lösen der Verriegelung durch entsprechende rückgerichtete translatorische Bewegung der gleichen Kolbenzylinderanordnung zunächst die Verriegelung gelöst und dann bei weiterer Ausfahrbewegung über eine daraus abgeleitete Schwenkbewegung der Riegelmechanismus in die eingefahrene Position abgesenkt.

Nachteilig bei dieser Vorrichtung ist, dass bei einer Betätigung der Verriegelungsvorrichtung stets der gesamte Bewegungsablauf, also beim Lösen der Verriegelung zunächst der Verriegelungskopf angehoben und in die entriegelte Position verdreht und anschließend die gesamte Verriegelungsvorrichtung abgesenkt wird. Umgekehrt wird beim Verriegeln zunächst die Verriegelungsvorrichtung angehoben und anschließend der eigentliche Verriegelungsvorgang mit dem Eckbeschlag eines aufgeladenen Containers ausgelöst. Ist eine Absenkung der Verriegelungsvorrichtung eigentlich nicht erforderlich, da an gleicher Position wieder ein Container verladen werden soll, muss gleichwohl der gesamte Bewegungsablauf abgefahren werden, was zu unnötiger Betätigung und damit Verschleiß führt und auch einem erheblichen Zeitbedarf entspricht.

Ferner ist in der noch nicht veröffentlichten DE 10 2021 115 027 des gleichen Anmelders eine absenkbare Containerverriegelung angemeldet, die ein getrenntes Ansteuern ermöglicht, nämlich mit einer ersten Kolbenzylinderanordnung für das Anheben und Absenken der gesamten Containerverriegelung und mit einem zweiten Zylinder für die Verriegelung des Containerbeschlages. Damit ist es möglich, Verriegelungspositionen auf einem Chassis bereitzustellen, die bei Nichtnutzung der jeweiligen Verriegelungsposition soweit unterhalb der Ladefläche absenkbar ausgebildet sind, dass ein entsprechend anderer Container frei über diesen Bereich auf der Ladefläche des Containerchassis aufliegen kann. Dabei braucht im Gegensatz zur EP 1 243 466 B1 die Verriegelungsvorrichtung nicht über den gesamten Bewegungsablauf abgefahren werden, was zu einer Zeitersparnis führt.

Nachteilig ist jedoch, dass in der angehobenen Position zur Aufnahme eines Containereckbeschlages die Verriegelungsvorrichtungen nach den beiden vorgenannten Schriften selbst kaum Auflasten des Containers aufnehmen können und auch nicht sollen. Vielmehr soll der Container seine Last auf die Ladefläche des Containerchassis ablasten, wobei die Verriegelungsvorrichtung lediglich der formschlüssigen Verankerung des Containers auf der Ladefläche dient. Somit kann jedoch bei einer Beladungssituation, bei der ein Container oberhalb der Ladefläche, also erhöht abgestellt werden soll, bei den Konstruktionen gemäß EP 1 243 466 B1 und der noch nachveröffentlichten DE 10 2021 115 027 der Container nicht ausreichend stabil auf die Unterkonstruktion abgelastet werden. Derartige Containertragwagen sind beispielsweise sogenannte Gooseneck-Chassis. Soll bei diesen ein Container ohne Gooseneck-Tunnel an vorderer Ladeposition aufgestellt werden soll, muss der dort abzustellende Container an seiner vordersten Position am Auflieger mit einer sogenannten Doppelverriegelung, wie beispielsweise aus der EP 0 934 848 A2 bekannt, in erhöhter Position verriegelt werden. Entsprechend muss das hintere Ende des Containers ebenfalls erhöht, also oberhalb der üblichen Ladefläche des Gooseneck-Chassis auf einer entsprechend erhöht angeordneten Verriegelung abgestellt werden. Zur Aufnahme der statischen und beim Fahren wirkenden erheblichen dynamischen Lasten sind die eingangs genannten Verriegelungen gemäß EP 1 243 466 B1 und/oder DE 10 2021 115 027 nicht ausgelegt.

Entsprechend ist es Aufgabe der Erfindung eine Anhebe- und Absenkanordnung für eine Containerverriegelung ausgehend von der EP 1 243 466 B1 anzugeben, die einerseits ein Absenken der Verriegelung unterhalb der Ladeflächenebene zur Beladung mit Containern anderer Eckbeschlagkonfiguration erlaubt und in erhöhter Ladeposition die statischen und dynamischen Lasten eines erhöht aufgestellten Containers, der seine Lasten nicht unmittelbar auf die Ladefläche auflasten kann, sicher abfangen kann.

Gelöst wird diese Aufgabe mit einer Anhebe- und Absenkanordnung gemäß Anspruch 1 und einem Anhebe- und Absenkverfahren gemäß Anspruch 8.

Dadurch, dass am Fahrzeug unterhalb der Ladefläche ein Führungsbauteil angeordnet ist, in dem eine von dem Antrieb verschiebbar ausgebildete Konsole geführt ist, wobei auf der Konsole die Containerverriegelungsvorrichtung befestigt ist und die Konsole zwischen einer unteren Stellung, bei der die Containerverriegelungsvorrichtung unterhalb der Ladefläche angeordnet ist, und einer angehobenen Stellung, bei der die Containerverriegelungsvorrichtung in über der Ladefläche erhöhter Position angeordnet ist, verschiebbar ist, und eine Sperreinrichtung vorgesehen ist, die die Konsole mit der Containerverriegelungsvorrichtung in angehobener Stellung in einer Sperrstellung arretiert, wird eine kraftbetätigte Verschiebung der auf einer Konsole angeordneten Containerverriegelungsvorrichtung ermöglicht, wobei in angehobener Stellung die Konsole mittels der Sperreinrichtung sicher fixiert wird. Damit ist es möglich, bei über der Ladefläche erhöhter Position für die Verriegelungsvorrichtung eine sichere Lastaufnahme der statischen und dynamischen Lasten eines Containers sicherzustellen. Dabei ist diese erhöhte Position insbesondere an sogenannten Gooseneck-Aufliegern erforderlich, da bei Transport von Containern ohne Gooseneck-Tunnel nur so die vordere Ladeposition belegt werden kann. Dies gilt sowohl für 20 ' wie auch für 30 ' oder 40 ' Container. Wichtig ist dabei, dass der in so erhöhter Position aufgestellte Container mit seiner Unterseite nicht auf der üblichen Ladefläche des Fahrzeugs (Gooseneck-Chassis) aufliegen kann, da die normale Ladeflächenhöhe nur bei Containern mit Gooseneck-Tunnel genutzt werden kann. Entsprechend müssen alle statischen und dynamischen Lasten, die von dem in erhöhter Position abgestellten Container auf die Containerverriegelungsvorrichtung und seine unmittelbare Umgebung abgelastet werden. Im Übrigen "schwebt" der Container über der herkömmlichen Ladefläche des Fahrzeugs (Gooseneck-Chassis). Um andererseits Container mit Gooseneck-Tunnel direkt auf der Ladefläche des Fahrzeugs (Gooseneck-Chassis) absetzen zu können, muss die Containerverriegelungsvorrichtung soweit absenkbar sein, dass dessen höchster Punkt unterhalb der Ladefläche des Fahrzeugs in seiner unteren Stellung positioniert ist. Daher ist die Kombination aus kraftbetätigter Verstellung der Konsole mit der Containerverriegelungsvorrichtung und kraftschlüssiger Arretierung der Konsole mit der Containerverriegelungsvorrichtung in angehobener Stellung in der Sperrstellung entscheidend. Dabei weist das Führungsbauteil wenigstens zwei parallel angeordnete Schrägnuten auf, in die zugeordnete Führungsachsen der Konsole eingreifen. Somit kann die Verstellung der Konsole mit der Containerverriegelungsvorrichtung mittels eines Linearantriebs durch Verschieben der Konsole entlang der Schrägnuten erfolgen.

Um eine ideale Lasteinleitung der Auflasten und der im Fahrbetrieb entstehenden dynamischen Lasten vom in erhöhter Position abgestellten Container in das Fahrzeug zu ermöglichen, weisen die Schrägnuten an ihrem oberen Ende einen ersten horizontalen Nutabschnitt auf.

Bevorzugt können die Schrägnuten an ihrem unteren Ende einen zweiten horizontalen Nutabschnitt aufweisen.

Dadurch, dass die Sperreinrichtung eine von einer Feder in Richtung auf die Sperrstellung vorgespannte, schwenkbar an der Konsole befestigte Sperre aufweist, wobei ein Gegenlager für die Sperre an dem Führungsbauteil angeordnet ist, ist eine konstruktiv einfache und selbst arretierende Lösung für die Sperreinrichtung angegeben.

Wenn der Sperre ein Betätigungselement zugeordnet ist, mit dem die Sperre gegen die Kraft der Feder aus der Sperrstellung verschwenkbar ausgebildet ist, kann mittels des Betätigungselementes die Arretierung gelöst und die Konsole mit der Containerverriegelungsvorrichtung von der angehobenen Stellung in die untere Stellung verstellt werden.

In bevorzugter Ausgestaltung weist der Antrieb einen doppelt wirkenden Pneumatikzylinder mit einer bewegbaren Kolbenstange auf, wobei das äußere Ende der Kolbenstange mit einer Verbindungsachse in einem Langloch an der Konsole angelenkt ist, wobei das Langloch bei Betätigung des Pneumatikzylinder zunächst einen Leerhub erlaubt, bis die Verbindungsachse am anderen Ende des Langloches anliegt. Der Pneumatikzylinder kann von der am Fahrzeug anliegenden Druckluftversorgung (LKW-Druckluftbremse) problemlos mitversorgt werden und die entsprechenden Stellkräfte kurzfristig aufbringen.

In weiterer Ausbildung ist das Betätigungselement die Verbindungsachse, wobei die Verbindungsachse während des Leerhubes die Sperre aus der Sperrstellung verschwenkt. Damit wird das Lösen der Sperreinrichtung durch den Antrieb mittels des doppelt wirkenden Pneumatikzylinders während des Leerhubs gelöst, sodass dann bei weiterer Bewegung des Pneumatikzylinders, nämlich Einfahren der Kolbenstange, die Konsole mit der Containerverriegelungsvorrichtung von der angehobenen Stellung in die untere Stellung gebracht wird.

Verfahrensgemäß zeichnet sich das Anhebe- und Absenkverfahren dadurch aus, dass die Containerverriegelungsvorrichtung von einem Hubantrieb kraftbetätigt auf eine untere Stellung, bei der die Containerverriegelungsvorrichtung unterhalb der Ladefläche angeordnet ist, abgesenkt oder auf eine angehobene Stellung, bei der die Containerverriegelungsvorrichtung in über der Ladefläche erhöhter Position angeordnet ist, angehoben wird, und in der angehobenen Stellung in einer Sperrstellung arretiert wird. Dabei wird die Sperrstellung von einer Federkraft beaufschlagt bei Erreichen der angehobenen Stellung selbsttätig eingenommen, wobei beim Verstellen von der angehobenen Stellung auf die untere Stellung zunächst ein Leerhub bei Betätigung des Hubantriebes erfolgt und erst bei weiterer Hubbewegung die Containerverriegelungsvorrichtung abgesenkt wird, wobei beim Leerhub die Arretierung in der Sperrstellung gelöst wird, womit eine selbsttätige Arretierung der auf einer Konsole angeordneten Containerverriegelungsvorrichtung in angehobener Stellung erreicht wird, womit auch bei Ausfall der Druckluftversorgung die Konsole und damit die Containerverriegelungsvorrichtung in der angehobenen Stellung verbleibt. Um diese Sicherungsredundanz zu lösen, ist gleichwohl lediglich ein aktives Betätigen des Hubantriebs zum Verstellen von der angehobenen Stellung in die untere Stellung nötig, wobei durch den zunächst eingeleiteten Leerhub die Arretierung in der Sperrstellung gelöst wird, um dann bei weiterer Hubbewegung die Containerverriegelungsvorrichtung abzusenken.

Nachfolgend wird ein Ausführungsbeispiel der Erfindung anhand der beiliegenden Figuren detailliert beschrieben.

Darin zeigt:
- Fig. 1: eine räumliche Ansicht der Anhebe- und Absenkanordnung mit einer Containerverriegelungsvorrichtung in unterer Stellung,
- Fig. 2: in räumlicher Ansicht die Anhebe- und Absenkanordnung gemäß Fig. 1 in angehobener Stellung,
- Fig. 3 a, b: eine Ansicht sowie eine Detailvergrößerung der Anhebe- und Absenkanordnung in Sperrstellung,
- Fig. 4 a, b: eine Ansicht und eine vergrößerte Detaildarstellung der Anhebe- und Absenkanordnung während der Betätigung des Pneumatikzylinders kurz vor dem Öffnen der Sperre,
- Fig. 5 a, b: eine Ansicht sowie eine vergrößerte Detaildarstellung der Anhebe- und Absenkanordnung mit geöffneter Sperre,
- Fig. 6 a, b: eine Ansicht sowie eine Detaildarstellung der Anhebe- und Absenkanordnung beim Absenken,
- Fig. 7 a, b: eine Ansicht sowie eine vergrößerte Detaildarstellung der Anhebe- und Absenkanordnung in unterer Stellung,
- Fig. 8 a, b: eine Ansicht sowie eine vergrößerte Detaildarstellung der Anhebe- und Absenkanordnung beim Anheben der Konsole mit der Containerverriegelungsvorrichtung und
- Fig. 9: in einer Übersichtszeichnung ein Gooseneck-Chassis mit der vorgenannten Anhebe- und Absenkanordnung beladen mit einem 40 Fuß Gooseneck-Container und
- Fig. 10: das in Fig. 9 dargestellte Gooseneck-Chassis beladen mit einem erhöht abstellten 20 Fuß Container.

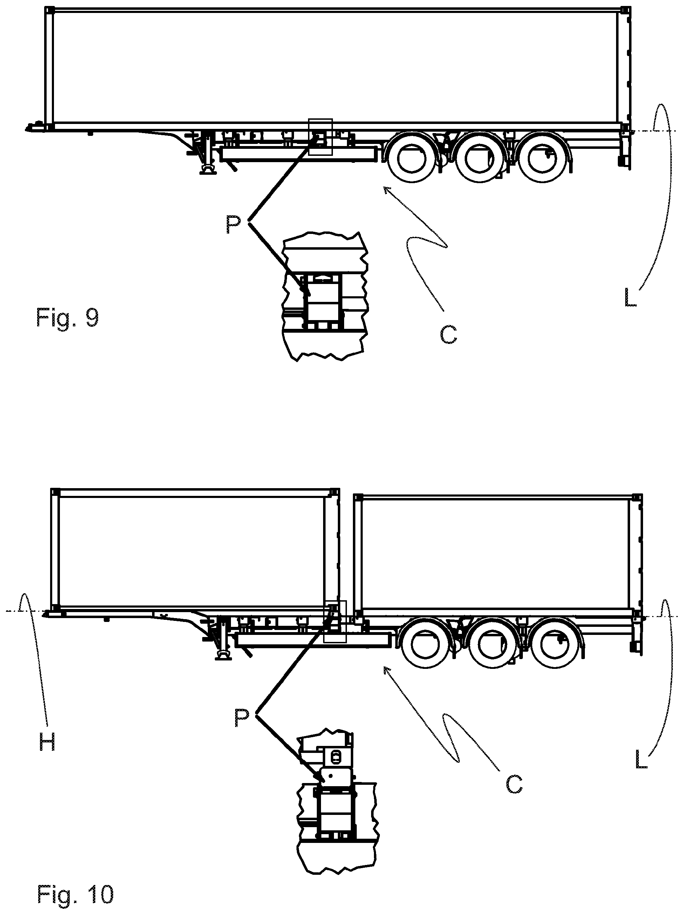

In Fig. 9 ist in einer Prinzipansicht ein Container-Chassis C beladen mit einem 40 Fuß Container mit Gooseneck-Tunnel dargestellt. Entsprechend liegt der 40 Fuß Container auf einer Ladefläche L des Container-Chassis auf und ist vorn mit sogenannten Horizontalverriegelungen in seinen Containereckbeschlägen verankert. Dabei ist die in Längsrichtung etwa mittig im Container-Chassis C angeordnete Anhebe- und Absenkanordnung in komplett unter die Ladefläche L abgesenkter Position eingefahren, damit der 40 Fuß Container auf der Ladefläche L aufliegen kann, wie aus der vergrößert dargestellten Positionierung P in Fig. 9 der Anhebe- und Absenkvorrichtung ersichtlich.

Demgegenüber ist in Fig. 10 die Anhebe- und Absenkanordnung mit der Containerverriegelungsvorrichtung in angehobener Stellung verankert, um ein 20 Fuß Container, der keinen Gooseneck-Tunnel aufweist, in oberhalb der Ladefläche L erhöhter Position H sicher lagern zu können, wie aus der vergrößert dargestellten Positionierung P in Fig. 10 der Anhebe- und Absenkvorrichtung ersichtlich. Dabei dient die auf einer Konsole 2 angebrachte Containerverriegelungsvorrichtung zur sicheren Verankerung der hinteren Eckbeschläge des 20 Fuß Containers. Die vorderen Eckbeschläge des 20 Fuß Containers sind auf der vorderen Containerverriegelung (Vertikalverriegelung) in erhöhter Position H aufgesetzt, da dieser Container ohne Gooseneck-Tunnel ausgestattet ist und somit der erhöhte Hals (Gooseneck) des Container-Chassis mit dem Königszapfen nicht vom Container umschlossen, sondern nur in erhöhter Position aufgeladen werden kann. Entsprechend ist es daher erforderlich, für die hintere Position zur Verankerung der hinteren Eckbeschläge des 20 Fuß Containers eine ebenso über die Ladefläche erhöhte (Lade-)Position H anzubieten, die zu dem die statischen und dynamischen Lasten des darauf verankerten Containers auf das Chassis übertragen kann. Dies ist der Einsatzzweck der hier beschriebenen Anhebe- und Absenkanordnung, um ein fernbetätigt auszulösendes Umstellen der Verriegelungspositionen und damit das Beladen mit unterschiedlichen Containern auf einem Chassis zu ermöglichen.

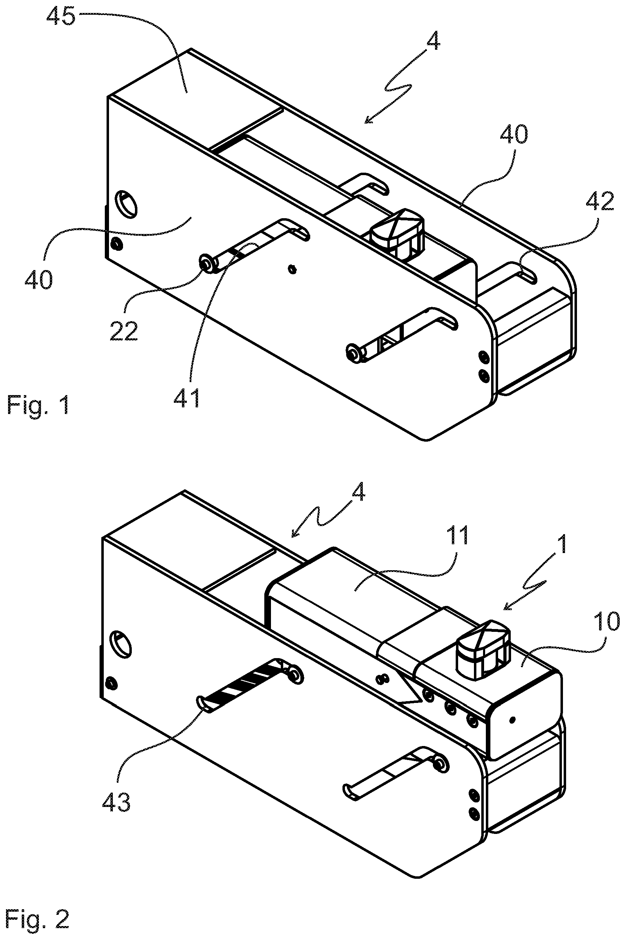

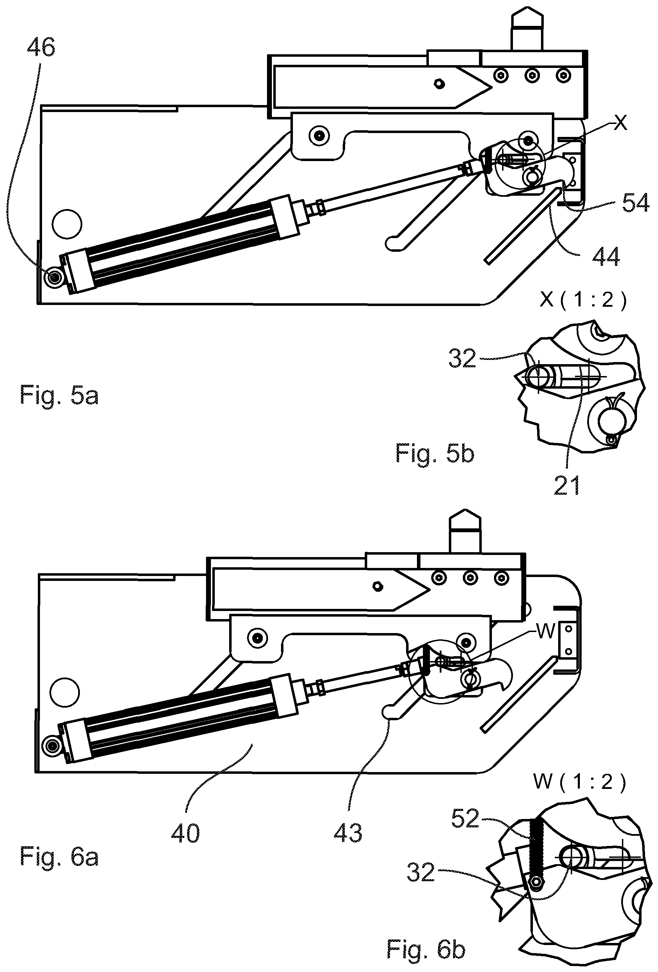

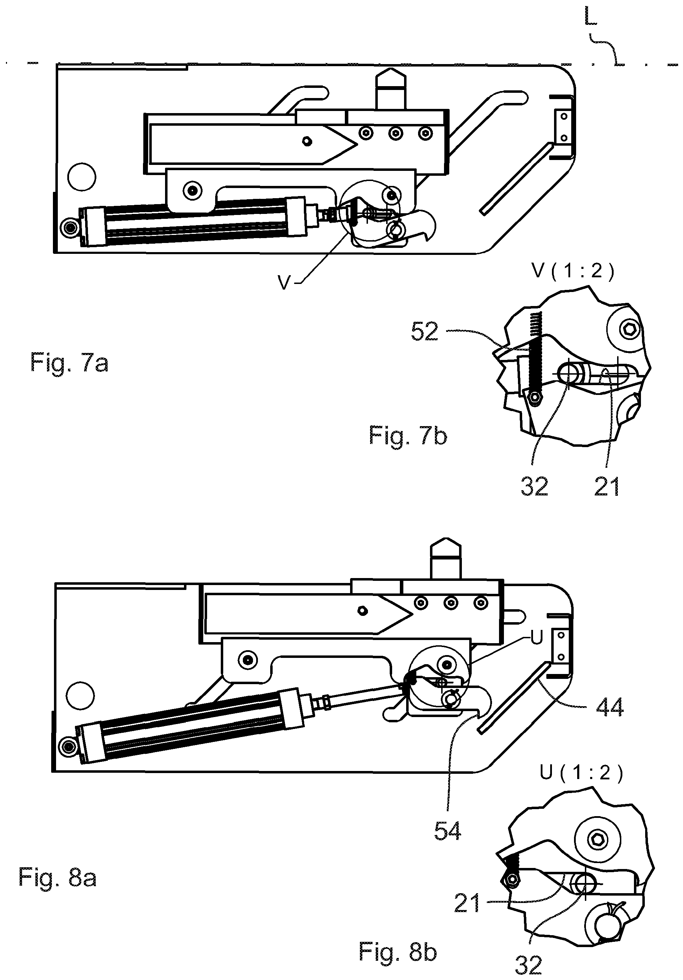

In Fig. 1 ist in räumlicher Ansicht eine Anhebe- und Absenkanordnung mit einer Containerverriegelungsvorrichtung 1 in seiner unteren Stellung dargestellt, bei der sich die Containerverriegelungsvorrichtung 1 komplett unterhalb der Ladefläche L (siehe Fig. 7a) befindet. In Fig. 2 ist ebenfalls in räumlicher Ansicht die Anhebe- und Absenkanordnung in angehobener Stellung dargestellt. Die Containerverriegelungsvorrichtung 1 steht dabei in erhöhter Position H (siehe Fig. 5a), wobei die erhöhte Position H sich dadurch auszeichnet, dass die Containerverriegelungsvorrichtung 1 eine Auflagefläche 10 aufweist, die oberhalb der üblichen Ladefläche L des Fahrzeugs (Containerchassis) angeordnet ist. Die für das Aufladen von Containern ohne Gooseneck-Tunnel auf dem entsprechenden Fahrzeug (Gooseneck-Chassis) erforderliche Höhendifferenz zwischen der normale Ladefläche L und der erhöhten Position H beträgt beispielsweise 10 bis 14 cm (siehe Fig. 10).

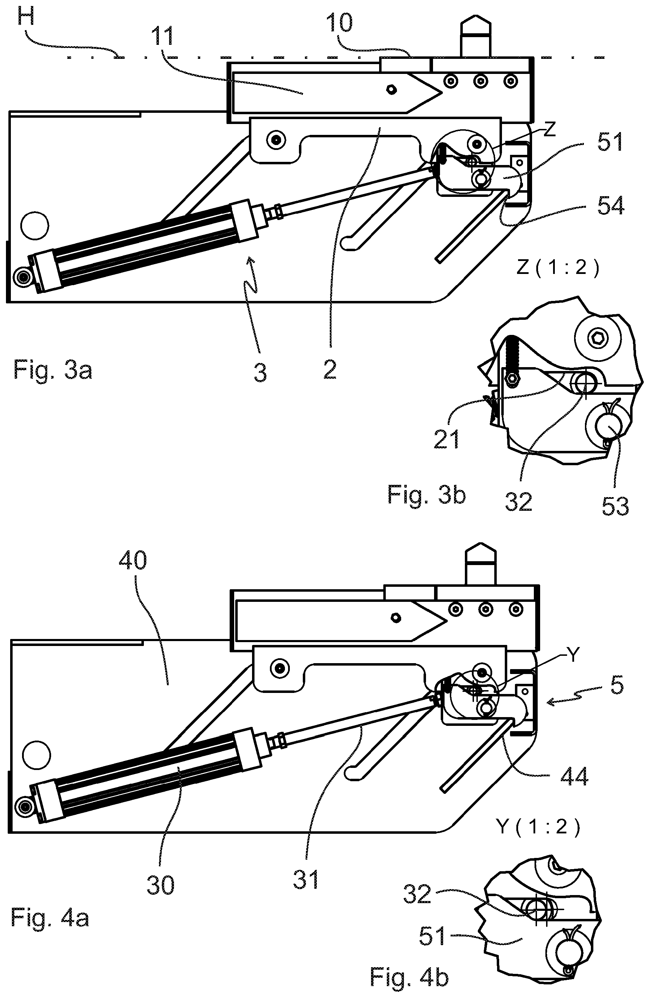

Ferner ist aus Fig. 2 sowie den weiteren Fig. 3 a bis 8 a entnehmbar, dass die Containerverriegelungsvorrichtung 1 ein im Wesentlichen quaderförmiges Antriebsgehäuse 11 aufweist, in dem ein hier nicht näher beschriebener kraftbetätigter Antrieb für die Containerverriegelungsvorrichtung 1, insbesondere durch einen Pneumatikzylinder verwirklicht ist. Eine derartige Containerverriegelungsvorrichtung ist beispielsweise in der doch nicht veröffentlichten DE 10 2021 112 894 des gleichen Anmelders beschrieben. Insoweit wird auf die Ausführung hinsichtlich der Funktionsweise einer derartigen Containerverriegelungsvorrichtung auf diese nachveröffentlichte Schrift verwiesen.

Aus den Fig. 1 und 2 ist ferner ersichtlich, dass die Anhebe- und Absenkanordnung ein Führungsbauteil 4 aufweist, in dem bzw. an dem eine Konsole 2 mit der Containerverriegelungsvorrichtung 1 über im Führungsbauteil 4 angeordnete Schrägnuten 41 von der unteren Stellung (Fig. 1) in die angehobene Stellung (Fig. 2) anhebbar und umgekehrt wieder absenkbar ist. Das Führungsbauteil 4 besteht im Wesentlichen aus zwei parallel und beabstandet zueinander angeordneten Wangen 40, die über geeignete Querverbindungen 45 miteinander verbunden sind. In den beiden Wangen 40 des Führungsbauteils 4 sind jeweils zwei parallel zueinander angeordnete Schrägnuten 41 eingebracht.

In den Fig. 3 a bis 8 a ist in der Ansicht die vordere Wange 40 fortgelassen, sodass freie Ansicht in das Innere des Führungsbauteils 4 gegeben ist. Selbstverständlich gehört zum funktionsgemäß richtigen Umfang auch die entsprechende Gegenlagerung durch die vordere, in den Fig. 3 a bis 8 a fortgelassene Wange 40 mit den auch darin ausgebildeten Schrägnuten 41.

Wie weiter aus den Fig. 1, 2 und auch Fig. 3 a bis 8 a entnehmbar ist, weist jede Schrägnut 41 einen ersten horizontalen Nutabschnitt 42 am oberen Ende der Schrägnut 41 und einen zweiten horizontalen Nutabschnitt 43 am unteren Ende der Schrägnut 41 auf. Ferner ist in der Ansicht der Fig. 3 a bis 8 a neben den von der dargestellten unteren Wange 40 vorstehenden Querverbindungen 45 ein Gegenlager 44 ausgebildet, das ebenfalls wie die Querverbindungen 45 die beiden Wangen 40, 40 miteinander verbindet und insoweit verbindungssteif in dem Führungsbauteil 4 angeordnet ist.

Ferner ist in den Fig. 3 a bis 8 a ein Antrieb 3 in Form eines doppelt wirkenden Pneumatikzylinders 30 dargestellt. In der Figurenebene linksseitig ist der Pneumatikzylinder 30 schwenkbar um eine Schwenkachse 46 an den Führungsbauteil 4 befestigt. Das andere Ende des Pneumatikzylinders 30 in Form einer aus dem Pneumatikzylinder ausfahrbaren Kolbenstange 31 ist mit seinem freien Ende mit einer Verbindungsachse 32 ausgestattet (siehe auch Detail-Fig. 3 b bis 8 b), die in einem Langloch 21 in der Konsole 2 geführt ist. Die Konsole 2 weist Führungsachsen 22 auf, die die Konsole 2 innerhalb des Führungsbauteils 4 in den Schrägnuten 41 lagert und führt.

Ferner ist in den Fig. 3 a bis 8 a und in den Detailansichten Fig. 3 b bis 8 b eine Sperreinrichtung 5 in unterschiedlichen funktionalen Stellungen dargestellt. Die Sperreinrichtung 5 weist eine um eine Drehachse 53 schwenkbare Sperre 51 auf. Die Sperre 51 hat an ihrem nach außen (in Figurenebene der Fig. 3 b bis 8 b nach rechts gerichteten Teil) einen Sperrvorsprung 54 auf, der mit dem Gegenlager 44 in Eingriff gelangen kann, wie dies in Fig. 3 a dargestellt ist. An der anderen dem Sperrvorsprung 54 abgewandten Seite der Sperre 51 ist eine Feder 52 angeordnet, die die Sperre 51 federbelastet in Zeichenansicht der Fig. 3 b bis 8 b rechtsdrehend vorbelastet.

Unmittelbar hinter der Sperre 51 ist das Langloch 21 in der Konsole 2 angeordnet, in dem auch die Verbindungsachse 32 der Kolbenstange 31 des Pneumatikzylinders 3 eingreift. Die Verbindungsachse 32 ist dabei so gestaltet, dass diese auf der Oberkante der Sperre 51 aufliegt und entsprechend der Kontur der Oberkante der Sperre 51 beim Verschieben der Verbindungsachse 32 im Langloch 21 die Sperre 51 entgegen der Kraft der Feder 52 in Linksdrehung um die Drehachse 53 verschwenkt, wie dies in Fig. 5 a dargestellt ist.

Nachfolgend wird der Bewegungsablauf bei Betätigung der Anhebe- und Absenkanordnung, insbesondere bezugnehmend auf die Fig. 3 b bis 8 b und Fig. 3 b bis 8 b, beschrieben.

In Fig. 3 a befindet sich die Konsole 2 mit der Containerverriegelungsvorrichtung 1 in angehobener Stellung und ist mit der Sperreinrichtung 5 arretiert. Dabei umgreift der Sperrvorsprung 54 der Sperre 51 das Gegenlager 44. Dabei befindet sich der Pneumatikzylinder 30 mit seiner Kolbenstange 31 in vollständig ausgefahrenem Zustand, sodass die am äußeren Ende der Kolbenstange 31 angeordnete Verbindungsachse 32 am rechten Rand des Langlochs 21 anliegt (siehe Fig. 3 b). In diesem Zustand verbleibt die Anhebe- und Absenkanordnung und somit die Konsole 2 mit der Containerverriegelungsvorrichtung 1 auch bei Druckabfall im Pneumatikzylinder 30, sodass vom in erhöhter Position H aufgeladenen Container auflastende statische und dynamische Lasten von der Auflagefläche 10 der Containerverriegelungsvorrichtung 1 und der Konsole 2 über die Führungsachsen 22 auf die Schrägnuten 41 und dort die ersten horizontalen Nutabschnitte 42 geleitet werden. Durch die Arretierung der Sperreinrichtung 5 mittels der Sperre 51 an dem Gegenlager 44 des Führungsbauteils 4 können auch Seitenlasten nicht zu einer Verschiebung der Containerverriegelungsvorrichtung und somit nicht zu einer verkehrsgefährdenden Situation führen (siehe Fig. 10).

Erst wenn der doppelt wirkende Pneumatikzylinder 30 des Antriebs 3 aktiv zum Absenken der Anhebe- und Absenkanordnung angesteuert wird, wird die Kolbenstange 31 und somit die Verbindungsachse 32 leicht lateral in Zeichenebene gemäß Fig. 4 a innerhalb des Langloches 21 nach links bewegt, womit die Verbindungsachse 32 bis an den Beginn der Kontur der Oberkante an der Sperre 51 verschoben wird. Bei weiterer Betätigung des Pneumatikzylinders wird nun die Sperre 51 in Linksdrehung um die Drehachse 53 versetzt und somit die Arretierung, nämlich der Sperrvorsprung 54 von dem Gegenlager 44 gelöst. Dieser Vorgang ist der sogenannte Leerhub, der in Fig. 5 a abgeschlossen ist. Damit befindet sich die Verbindungsachse 32 am linksseitigen Ende des Langlochs 21 (siehe Fig. 5 b) und die Sperre 51 ist an der Seite des Sperrvorsprungs 54 maximal angehoben.

Bei weiterer Betätigung des Pneumatikzylinders 30 durch weiteres Einfahren der Kolbenstange 31 wird nun die Konsole 2 mit der Containerverriegelungsvorrichtung 1 in den Schrägnuten 41 über die Führungsachsen 22 abgesenkt, wie dies Fig. 6 a zeigt.

Schließlich erreicht bei vollständig eingefahrener Kolbenstange 31 des Pneumatikzylinders 30 die Anhebe- und Absenkanordnung die untere Stellung, womit die Konsole 2 mit der Containerverriegelungsvorrichtung 1 so weit abgesenkt ist, dass die Pilzkopfspitze der Containerverriegelungsvorrichtung 1 unterhalb der Ladefläche L des Fahrzeugs (Containerchassis C, siehe Fig. 9) liegt. Die Konsole 2 ist mit ihren Führungsachsen 22 somit nun am unteren Ende der Schrägnut 41 am linksseitigen Ende der zweiten horizontalen Nutabschnitte 43 angelangt (Fig. 7 a).

Wird nun bedarfsweise die Anhebe- und Absenkanordnung zum Anheben der Containerverriegelungsvorrichtung 1 aktiviert, fährt die Kolbenstange 31 des Pneumatikzylinders 30 wiederum aus, womit zunächst die am äußeren Ende der Kolbenstange 31 angeordnete Verbindungsachse 32 im Langloch 21 von der linken Position zur rechten Position im Langloch 21 in einem Leerhub verschoben wird, mit dem die Sperre 51 über die Feder 52 wieder in die Grundstellung zum Bedarfsweisen einrasten der Sperre 51 an dem Gegenlager 44 verstellt wird (Fig. 8 a und 8 b). Bei weiterem Ausfahren der Kolbenstange wird dann die Konsole 2 mit der Containerverriegelungsvorrichtung 1 über die in den Schrägnuten 41 eingreifenden Führungsachsen 22 angehoben. Am Ende des Verstellvorganges erreicht die Konsole 2 mit ihren Führungsachsen 22 wiederum die ersten horizontalen Nutabschnitte 42 am oberen Ende der Schrägnut 41, womit die Sperreinrichtung 5 mittels der mit Feder 52 belasteten Sperre 51 automatisch mit dem Gegenlager 44 eingreift und die Konsole mit der Containerverriegelungsvorrichtung 1 in angehobener Stellung arretiert, womit der Zustand gemäß Fig. 3 a wieder erreicht ist.

### Bezugszeichenliste

- 1: Containerverriegelungsvorrichtung
- 10: Auflagefläche
- 11: Antriebsgehäuse

- 2: Konsole
- 21: Langloch
- 22: Führungsachse

- 3: Antrieb
- 30: doppelt wirkender Pneumatikzylinder
- 31: Kolbenstange
- 32: Verbindungsachse

- 4: Führungsbauteil
- 40: Wange
- 41: Schrägnut
- 42: erster horizontaler Nutabschnitt
- 43: zweiter horizontaler Nutabschnitt
- 44: Gegenlager
- 45: Querverbindung
- 46: Schwenkachse

- 5: Sperreinrichtung
- 51: Sperre
- 52: Feder
- 53: Drehachse
- 54: Sperrvorsprung

- C: Fahrzeug, Container-Chassis
- H: erhöhte Position
- L: Ladefläche
- P: Positionierung der Anhebe- und Abesenkvorrichtung

## Patentansprüche

1. Anhebe- und Absenkanordnung mit einer Containerverriegelungsvorrichtung (1) auf einem Fahrzeug (C), zur Verriegelung eines auf einer Ladefläche (L) des Fahrzeugs bedarfsweise in über der Ladefläche (L) erhöhter Position (H) zu transportierenden Containers, wobei die Anhebe- und Absenkanordnung einen Antrieb (3) aufweist, mit dem die Containerverriegelungsvorrichtung (1) absenkbar und wieder anhebbar ausgebildet ist, wobei
- am Fahrzeug unterhalb der Ladefläche (L) ein Führungsbauteil (4) angeordnet ist, in dem eine von dem Antrieb (3) verschiebbar ausgebildete Konsole (2) geführt ist, wobei auf der Konsole (2) die Containerverriegelungsvorrichtung (1) befestigt ist und die Konsole (2) zwischen einer unteren Stellung, bei der die Containerverriegelungsvorrichtung (1) unterhalb der Ladefläche (L) angeordnet ist, und einer angehobenen Stellung, bei der die Containerverriegelungsvorrichtung (1) in über der Ladefläche (L) erhöhter Position (H) angeordnet ist, verschiebbar ist,
- eine Sperreinrichtung (5) vorgesehen ist, die die Konsole (2) mit der Containerverriegelungsvorrichtung (1) in angehobener Stellung in einer Sperrstellung arretiert, und **dadurch gekennzeichnet dass**
- das Führungsbauteil (4) wenigstens zwei parallel angeordnete Schrägnuten (41) aufweist, in die zugeordnete Führungsachsen (22) der Konsole (2) eingreifen.

2. Anhebe- und Absenkanordnung nach Anspruch 1, **dadurch gekennzeichnet, dass** die Schrägnuten (41) an ihrem oberen Ende einen ersten horizontalen Nutabschnitt (42) aufweisen.

3. Anhebe- und Absenkanordnung nach Anspruch 1 oder 2, **dadurch gekennzeichnet, dass** die Schrägnuten (41) an ihrem unteren Ende einen zweiten horizontalen Nutabschnitt (43) aufweisen.

4. Anhebe- und Absenkanordnung nach einem der vorangehenden Ansprüche, **dadurch gekennzeichnet, dass** die Sperreinrichtung (5) eine von einer Feder (52) in Richtung auf die Sperrstellung vorgespannte, schwenkbar an der Konsole (2) befestigte Sperre (51) aufweist, wobei ein Gegenlager (44) für die Sperre (51) an dem Führungsbauteil (4) angeordnet ist.

5. Anhebe- und Absenkanordnung nach Anspruch 4, **dadurch gekennzeichnet, dass** der Sperre (51) ein Betätigungselement zugeordnet ist, mit dem die Sperre (51) gegen die Kraft der Feder (52) aus der Sperrstellung verschwenkbar ausgebildet ist.

6. Anhebe- und Absenkanordnung nach einem der vorangehenden Ansprüche, **dadurch gekennzeichnet, dass** der Antrieb (3) einen doppelt wirkenden Pneumatikzylinder (30) mit einer bewegbaren Kolbenstange (31) aufweist, wobei das äußere Ende der Kolbenstange (31) mit einer Verbindungsachse (32) in einem Langloch (21) an der Konsole (2) angelenkt ist, wobei das Langloch bei Betätigung des Pneumatikzylinder (30) zunächst einen Leerhub erlaubt, bis die Verbindungsachse (32) am anderen Ende des Langloches (21) anliegt.

7. Anhebe- und Absenkanordnung nach Anspruch 4, **dadurch gekennzeichnet, dass** das Betätigungselement die Verbindungsachse (32) ist, wobei die Verbindungsachse (32) während des Leerhubes die Sperre (51) aus der Sperrstellung verschwenkt.

8. Anhebe- und Absenkverfahren mit einer Containerverriegelungsvorrichtung (1) auf einem Fahrzeug, zur Verriegelung eines auf einer Ladefläche (L) des Fahrzeugs bedarfsweise in über der Ladefläche (L) erhöhter Position (H) zu transportierenden Containers, wobei die Containerverriegelungsvorrichtung (1) von einem Hubantrieb kraftbetätigt auf eine untere Stellung, bei der die Containerverriegelungsvorrichtung (1) unterhalb der Ladefläche (L) angeordnet ist, abgesenkt oder auf eine angehobene Stellung, bei der die Containerverriegelungsvorrichtung (1) in über der Ladefläche (L) erhöhter Position (H) angeordnet ist, angehoben wird, und in der angehobenen Stellung in einer Sperrstellung arretiert wird, wobei die Sperrstellung von einer Federkraft beaufschlagt bei Erreichen der angehobenen Stellung selbsttätig eingenommen wird, **dadurch gekennzeichnet, dass** beim Verstellen von der angehobenen Stellung auf die untere Stellung zunächst ein Leerhub bei Betätigung des Hubantriebes erfolgt und erst bei weiterer Hubbewegung die Containerverriegelungsvorrichtung (1) abgesenkt wird, wobei beim Leerhub die Arretierung in der Sperrstellung gelöst wird.

## Claims

1. A lifting and lowering arrangement having a container locking device (1) on a vehicle (C) for locking a container to be transported on a load platform (L) of the vehicle, as required, in a raised position (H) above the load platform (L), wherein the lifting and lowering arrangement comprises a drive (3) by means of which the container locking device (1) is designed to be lowered and raised again, wherein
- a guide component (4) is arranged on the vehicle below the load platform (L), in which a console (2) designed to be displaceable by the drive (3) is guided, wherein the container locking device (1) is fastened to the console (2), and wherein the console (2) is displaceable between a lower position, in which the container locking device (1) is arranged below the load platform (L), and a raised position, in which the container locking device (1) is arranged in a raised position (H) above the load platform (L),
- a locking device (5) being provided which locks the console (2) with the container locking device (1) in the raised position in a locking position,
**characterized in that**
- the guide component (4) comprises at least two inclined grooves (41) arranged parallel to one another, into which associated guide axes of the console (2) engage.

2. The lifting and lowering arrangement according to claim 1, **characterized in that** the inclined grooves (41) have, at their upper end, a first horizontal groove section (42).

3. The lifting and lowering arrangement according to claim 1 or 2, **characterized in that** the inclined grooves (41) have, at their lower end, a second horizontal groove section (43).

4. The lifting and lowering arrangement according to one of the preceding claims, **characterized in that** the locking device (5) comprises a locking element (51) which is biased by a spring (52) in the direction of the locking position and is pivotably mounted on the console (2), wherein a counter bearing (44) for the locking element (51) is arranged on the guide component (4).

5. The lifting and lowering arrangement according to claim 4, **characterized in that** an actuating element is associated with the locking element (51), by means of which the locking element (51) is designed to be pivoted out of the locking position against the force of the spring (52).

6. The lifting and lowering arrangement according to one of the preceding claims, **characterized in that** the drive (3) comprises a double-acting pneumatic cylinder (30) with a movable piston rod (31), wherein the outer end of the piston rod (31) is articulated via a connecting pin (32) in an elongated hole (21) on the console (2), wherein, upon actuation of the pneumatic cylinder (30), the elongated hole initially allows an idle stroke until the connecting pin (32) abuts the other end of the elongated hole (21).

7. The lifting and lowering arrangement according to claim 4, **characterized in that** the actuating element is the connecting pin (32),
wherein the connecting pin (32) pivots the locking element (51) out of the locking position during the idle stroke.

8. A lifting and lowering method using a container locking device (1) on a vehicle for locking a container to be transported on a load platform (L) of the vehicle, as required, in a raised position (H) above the load platform (L), wherein the container locking device (1) is force-actuated by a lifting drive to be lowered into a lower position, in which the container locking device (1) is arranged below the load platform (L), or raised into a raised position, in which the container locking device (1) is arranged in a raised position (H) above the load platform (L), and is locked in the raised position in a locking position, wherein the locking position is automatically assumed under the action of a spring force upon reaching the raised position,
**characterized in that**
when adjusting from the raised position to the lower position, an idle stroke initially occurs upon actuation of the lifting drive, and the container locking device (1) is lowered only during a subsequent lifting movement, wherein, during the idle stroke, the locking in the locking position is released.

## Revendications

1. Dispositif de levage et d'abaissement comprenant un dispositif de verrouillage de conteneur (1) sur un véhicule (C), destiné au verrouillage d'un conteneur à transporter sur une plate-forme de chargement (L) du véhicule, selon les besoins, dans une position surélevée (H) au-dessus de la plate-forme de chargement (L), le dispositif de levage et d'abaissement comprenant un actionnement (3) au moyen duquel le dispositif de verrouillage de conteneur (1) est conçu pour être abaissé et relevé de nouveau,
- un élément de guidage (4) étant disposé sur le véhicule au-dessous de la plate-forme de chargement (L), dans lequel est guidée une console (2) conçue pour être déplaçable par l'actionnement (3), le dispositif de verrouillage de conteneur (1) étant fixé sur la console (2), et la console (2) étant déplaçable entre une position inférieure, dans laquelle le dispositif de verrouillage de conteneur (1) est disposé au-dessous de la plate-forme de chargement (L), et une position relevée, dans laquelle le dispositif de verrouillage de conteneur (1) est disposé dans une position surélevée (H) au-dessus de la plate-forme de chargement (L),
- un dispositif de verrouillage (5) étant prévu, lequel immobilise la console (2) avec le dispositif de verrouillage de conteneur (1) en position relevée dans une position de verrouillage,
**caractérisé en ce que**
- l'élément de guidage (4) comporte au moins deux rainures inclinées (41) disposées parallèlement l'une à l'autre, dans lesquelles s'engagent des axes de guidage associés de la console (2).

2. Dispositif de levage et d'abaissement selon la revendication 1, **caractérisé en ce que** les rainures inclinées (41) présentent, à leur extrémité supérieure, une première section de rainure horizontale (42).

3. Dispositif de levage et d'abaissement selon la revendication 1 ou 2, **caractérisé en ce que** les rainures inclinées (41) présentent, à leur extrémité inférieure, une deuxième section de rainure horizontale (43).

4. Dispositif de levage et d'abaissement selon l'une des revendications précédentes, **caractérisé en ce que** le dispositif de verrouillage (5) comprend un élément de verrouillage (51) monté pivotant sur la console (2) et précontraint par un ressort (52) en direction de la position de verrouillage, un appui opposé (44) pour l'élément de verrouillage (51) étant disposé sur l'élément de guidage (4).

5. Dispositif de levage et d'abaissement selon la revendication 4, **caractérisé en ce que** un élément d'actionnement est associé à l'élément de verrouillage (51), au moyen duquel l'élément de verrouillage (51) est conçu pour être pivoté hors de la position de verrouillage contre la force du ressort (52).

6. Dispositif de levage et d'abaissement selon l'une des revendications précédentes, **caractérisé en ce que** l'actionnement (3) comprend un vérin pneumatique à double effet (30) doté d'une tige de piston mobile (31), l'extrémité extérieure de la tige de piston (31) étant articulée, par l'intermédiaire d'un axe de liaison (32), dans une lumière oblongue (21) de la console (2), la lumière oblongue permettant, lors de l'actionnement du vérin pneumatique (30), dans un premier temps, une course à vide jusqu'à ce que l'axe de liaison (32) vienne en butée contre l'autre extrémité de la lumière oblongue (21).

7. Dispositif de levage et d'abaissement selon la revendication 4, **caractérisé en ce que** l'élément d'actionnement est l'axe de liaison (32), l'axe de liaison (32) pivotant l'élément de verrouillage (51) hors de la position de verrouillage pendant la course à vide.

8. Procédé de levage et d'abaissement utilisant un dispositif de verrouillage de conteneur (1) sur un véhicule, destiné au verrouillage d'un conteneur à transporter sur une plate-forme de chargement (L) du véhicule, selon les besoins, dans une position surélevée (H) au-dessus de la plate-forme de chargement (L), le dispositif de verrouillage de conteneur (1) étant actionné en force par un entraînement de levage pour être abaissé dans une position inférieure, dans laquelle le dispositif de verrouillage de conteneur (1) est disposé au-dessous de la plate-forme de chargement (L), ou relevé dans une position relevée, dans laquelle le dispositif de verrouillage de conteneur (1) est disposé dans une position surélevée (H) au-dessus de la plate-forme de chargement (L), et étant verrouillé en position relevée dans une position de verrouillage, la position de verrouillage étant automatiquement adoptée sous l'effet d'une force de ressort lors de l'atteinte de la position relevée, **caractérisé en ce que**
lors du passage de la position relevée à la position inférieure, une course à vide se produit d'abord lors de l'actionnement de l'entraînement de levage, et le dispositif de verrouillage de conteneur (1) n'est abaissé que lors d'un mouvement de levage ultérieur, la fixation dans la position de verrouillage étant libérée pendant la course à vide.
